(19) Europäisches Patentamt
European Patent Office
Office européen des brevets

(11) Veröffentlichungsnummer : **0 395 981 B1**

# (12) EUROPÄISCHE PATENTSCHRIFT

(45) Veröffentlichungstag der Patentschrift :
**13.01.93 Patentblatt 93/02**

(21) Anmeldenummer : **90107704.0**

(22) Anmeldetag : **24.04.90**

(51) Int. Cl.$^5$ : **C08L 25/02,** C08K 13/02, // (C08K13/02, 3:00, 5:01, 5:02, 5:16)

## (54) Expandierbare Styrolpolymerisate.

(30) Priorität : **29.04.89 DE 3914292**

(43) Veröffentlichungstag der Anmeldung :
**07.11.90 Patentblatt 90/45**

(45) Bekanntmachung des Hinweises auf die Patenterteilung :
**13.01.93 Patentblatt 93/02**

(84) Benannte Vertragsstaaten :
**AT BE DE ES FR GB IT NL**

(56) Entgegenhaltungen :
**EP-A- 0 003 799**
**EP-A- 0 069 364**
**DD-A- 110 889**
**US-A- 3 331 812**
**US-A- 3 565 835**
**US-A- 4 029 614**

(73) Patentinhaber : **BASF Aktiengesellschaft**
**Carl-Bosch-Strasse 38**
**W-6700 Ludwigshafen (DE)**

(72) Erfinder : **Hahn, Klaus, Dr.**
**Im Buegen 9**
**W-6719 Kirchheim (DE)**
Erfinder : **Guhr, Uwe, Dr.**
**Beim Hochgericht 9**
**W-6718 Gruenstadt (DE)**
Erfinder : **Hintz, Hans, Dr.**
**Wolframstrasse 4**
**W-6700 Ludwigshafen (DE)**
Erfinder : **Roehrig, Karl Heinz**
**Alfred-Delp-Strasse 15**
**W-6710 Frankenthal (DE)**

EP 0 395 981 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Flammschutzmittel enthaltende expandierbare Styrolpolymerisate, die beim Aufschäumen Schaumstoffe mit einer homogenen Zellstruktur mit ca. 5 bis 10 Zellen pro mm ergeben.

Schaumstoffe auf Basis von Styrolpolymerisaten besitzen bekanntlich eine optimale Wärmedämmwirkung, wenn ihre Zellgröße ca. 5 bis 10 Zellen pro mm beträgt.

Bei der Herstellung von Polystyrolschaumstoffen, die organische Bromverbindungen des Flammschutzmittels enthalten, wirkt das Flammschutzmittel gleichzeitig als Keimbildner. Derartige Schaumstoffe sind daher äußerst feinzellig mit einer mittleren Zellgröße von ca. 15 bis 25. Ihre Wärmedämmwirkung ist daher unbefriedigend. Bei der Herstellung von Schaumstoffblöcken wird ferner ein unerwünschtes Schrumpfen in der Mitte der Blockseitenflächen beobachtet.

Der Erfindung lag die Aufgabe zugrunde, expandierbare Styrolpolymerisate bereitzustellen, die ein Flammschutzmittel enthalten und die beim Aufschäumen Schaumstoffe liefern mit einer homogenen Zellstruktur mit ca. 5 bis 10 Zellen pro mm. Gleichzeitig sollte das unerwünschte Schrumpfen der Schaumstoffblöcke verhindert werden.

Überraschenderweise wurde nun gefunden, daß diese Aufgaben gelöst werden durch den Zusatz von geringen Mengen eines Ammoniumsalzes und bestimmten organischen Stickstoffverbindungen.

Gegenstand der Erfindung sind somit expandierbare Styropolymerisate, enthaltend

a) ein Styrolpolymerisat

b) 1 bis 10 Gew.-% eines $C_3$-$C_6$-Kohlenwasserstoffs als Treibmittel

c) 0,4 bis 6 Gew.-% einer organischen Bromverbindung als Flammschutzmittel

d) 0,00001 bis 0,1 Gew.-% eines Ammoniumsalzes

e) 0,001 bis 0,1 Gew.-% eines organischen Amins, ausgewählt aus der Gruppe der

- e1) Amine der allgemeinen Formel $NR_1R_2R_3$, in der $R_1$ = Alkyl oder Cycloalkyl mit 4 bis 20 C-Atomen, bzw., wenn $R_2 = R_3 = H$, mit 6 bis 20 C-Atomen, $R_2$ und $R_3$ = H oder Alkyl oder Cycloalkyl mit 1 bis 15 C-Atomen bedeutet,
- e2) Oxalkylierungsprodukte des Ammoniaks oder eines primären oder sekundären Amins mit 1 bis 20 C-Atomen, und
- e3) 2,4-Diamino-1,3,5-triazine, die in 6-Stellung einen Alkylrest mit 1 bis 20 C-Atomen, bei dem gegebenenfalls in $\omega$-Stellung ein H-Atom durch einen 2,4-Diamino-1,3,5-triazin-6-yl-Rest ersetzt ist, einen Cycloalkylrest mit 5 bis 12 C-Atomen oder einen Arylrest mit 6 bis 12 C-Atomen enthalten

und gegebenenfalls

f) übliche Zusatzstoffe in wirksamen Mengen,

wobei die Prozentangaben sich jeweils auf das Styrolpolymerisat beziehen.

Aus der US-Patentschrift 3 565 835 sind expandierbare Styrolpolymerisate bekannt, die als Keimbildner 0,0001 bis 1 Gew.-% Ammoniumsulfat enthalten. Die daraus hergestellten Schaumstoffe sind äußerst feinzellig.

Aus der US-Patentschrift 4 029 614 sind flammschutzmittelhaltige expandierbare Styrolpolymerisate bekannt, die 0,0001 bis 1 Gew.-% eines in Styrol löslichen Amins enthalten. Die daraus hergestellten Schaumstoffe zeigen eine mittlere Zellzahl zwischen 3,4 und 7,4 Zellen/mm, die Schaumstruktur ist jedoch inhomogen.

Aus der US-Patentschrift 3 755 209 sind flammschutzmittelhaltige expandierbare Styrolpolymerisat bekannt, die geringe Mengen eines Oxalkylierungsmittels des Ammoniaks oder eines primären oder sekundären aliphatischen Amins enthalten. Die daraus hergestellten Schaumstoffe weisen eine inhomogene Schaumstruktur auf.

Aus der US-Patentschrift 4 129 922 sind flammschutzmittelhaltige expandierbare Styrolpolymerisate bekannt, die geringe Mengen eines substituierten 2,4-Diamino-1,3,5-triazins enthalten. Die daraus hergestellten Schaumstoffe weisen ebenfalls eine inhomogene Schaumstruktur auf.

Geeignete Styrolpolymerisate a) sind Polystryrol und Copolymere, die mindestens 50 Gew.-% Styrol einpolymerisiert enthalten. Als Comonomere kommen z.B. in Betracht $\alpha$-Methylstyrol, kernhalogenierte Styrole, kernalkylierte Styrole, Acrylnitril, Ester der (Meth)acrylsäure von Alkoholen mit 1 bis 8 C-Atomen. N-Vinylverbindungen, wie N-Vinylcarbazol, Maleinsäureanhydrid. Vorteilhaft enthält das Styrolpolymerisat eine geringe Menge eines Vernetzers einpolymerisiert, d.h. einer Verbindung mit mehr als einer, vorzugsweise zwei, polymerisierbaren Doppelbindungen, wie Divinylbenzol, Butadien und Butandioldiacrylat. Der Vernetzer wird im allgemeinen in einer Menge von 0,005 bis 0,05 Mol-%, bezogen auf Styrol, verwendet. Styrolpolymeriate, die mindestens 5 Gew.-%, im allgemeinen 5 bis 17 Gew.-%, vorzugsweise 5 bis 10 Gew.-% Acrylnitril einpolymerisiert enthalten, führen zu Formmassen, die sich durch eine hohe Ölbeständigkeit auszeichnen. Vorteilhaft setzt man dazu als Styrolpolymerisat ein Gemisch aus Polystyrol und einem styrollöslichen Styrol-Acrylnitril-Copolymeren ein, insbesondere ein Gemisch aus 50 bis 83 Gew.-%, vorzugsweise 60 bis 80 Gew.-% Polystyrol und 17

bis 50 Gew.-%, insbesondere 20 bis 40 Gew.-% eines Styrol-Acrylnitril-Copolymeren mit einem Gehalt an einpolymerisiertem Acrylnitril von eta 15 bis 35 Gew.-%, insbesondere 20 bis 30 Gew.-%.

Als Treibmittel b) enthalten die Formmassen 1 bis 10 Gew.-%, vorzugsweise 3 bis 8 Gew.-%, eines $C_3$-$C_6$-Kohlenwasserstoffs, wie Propan, Butan, Isobutan, n-Pentan, i-Pentan, Neopentan und/oder Hexan. Vorzugsweise wird ein handelsübliches Pentan-Gemisch verwendet.

Als organische Bromverbindungen c) werden die üblicherweise als Flammschutzmittel verwendeten Bromverbindungen eingesetzt, die im allgemeinen mindestens 2 Bromatome enthalten und einen Bromgehalt von mindestens 40 Gew.-% aufweisen. Geeignete Bromverbindungen sind 1,2,3,4-Tetrabrombutan, 1,2,4-Tribrombutan, Tetrabrompentan, bromsubstituierte Cycloalkane, wie 1-Chlor-2,3,4,5,6-pentabromcyclohexan, 1,2,3,4,5,6-Hexabromcyclohexan, 1,2,5,6,9,10-Hexabromocyclododecan, Octabromcyclohexadecan, Dibromethylbenzol, Pentabromdiphenylether, Ester und Acetale des Dibrompropanols, wie Tris-(2,3-dibrompropyl)-phosphat. Bevorzugt wird Hexabromcyclododecan verwendet.

Die organische Bromverbindung wird in üblichen wirksamen Mengen von 0,4 bis 6, vorzugsweise 0,5 bis 3 Gew.-%, verwendet. Die Formmasse soll im allgemeinen einen Bromgehalt zwischen 0,3 und 5 Gew.-%, insbesondere zwischen 0,5 und 4 und vorzugsweise zwischen 0,8 und 3 Gew.-% Brom aufweisen.

Die expandierbaren Styrolpolymerisate enthalten als Zusatzstoff d) 0,00001 bis 0,1, vorzugsweise 0,00002 bis 0,001, insbesondere 0,00005 bis 0,005 Gew.-% eines Ammoniumsalzes. Geeignet sind insbesondere Ammoniumsalze anorganischer Säuren wie Ammoniumchlorid, -fluorid, -bromid und vorzugsweise Ammoniumsulfat und Ammoniumbicarbonat. Das Ammoniumsalz liegt in den Polymerisaten im allgemeinen als wäßrige Lösung in Form feinster Tröpfchen vor. Um die gewünschte Menge des Salzes im Polymerisat zu gewährleisten, wird dem Polymerisationssalz bei der Suspensionspolymerisation eine wesentlichz größere Menge an Ammonsalz zugefügt, da nur ein sehr kleiner Teil der wäßrigen Phase in dem Polymerisat eingeschlossen wird. Die optimale Zusatzmenge läßt sich leicht durch Vorversuche ermitteln.

Als weiterer Zusatzstoff e) werden bestimmte organische Amine in einer Menge von 0,001 bis 0,1 vorzugsweise 0,005 bis 0,05, insbesondere 0,005 bis 0,02 Gew.-%, verwendet. Geeignet sind dazu e1) Amine der allgemeinen Formel $NR_1R_2R_3$, in der $R_1$ = Alkyl oder Cycloalkyl mit 4 bis 20 C-Atomen, bzw., wenn $R_2 = R_3 = H$, mit 6 bis 20 C-Atomen, $R_2$ und $R_3$ = H oder Alkyl oder Cycloalkyl mit 1 bis 15 C-Atomen bedeutet. Vorzugsweise werden Amine verwendet, die mehr als 6, insbesondere 10 oder mehr C-Atome enthalten, wie n-Decylamin, n-Dodecylamin, Tetradecylamin, Dihexylamin, Cyclohexylamin, Dicyclohexylamin.

Geeignete Amine sind auch e2) Oxalkylierungsprodukte des Ammoniaks oder eines primären oder sekundären Amins mit 1 bis 20 C-Atomen. Oxalkylierungsprodukte des Ammoniaks oder primärer oder sekundärer Amine im Sinne der Erfindung sind die als Mono-, Di- oder Trialkanolamine bekannten Umsetzungsprodukte von Ethylenoxid, Propylenoxid oder höheren 1,2-Epoxiden mit Ammoniak oder primären oder sekundären aliphatischen Aminen sowie deren durch weitere Umsetzung mit Alkylenoxiden gebildeten Polyalkylenglykolderivate. Als primäre oder sekundäre aliphatische ein- oder mehrwertige Amine sind z.B. verwendbar solche, deren Substituenten Alkylreste mit 1 bis 20, insbesondere 6 bis 20 C-Atomen, Aminoalkylreste mit 2 bis 8, insbesondere 2 bis 6 C-Atomen, Cycloalkylreste mit 5 bis 7 C-Atomen im Ring, oder deren alkylsubstituierte Derivate mit 1 bis 20, insbesondere 1 bis 10 C-Atomen im Alkylsubstituenten sind, sowie solche (sekundären) cyclischen Amine, in denen die Substituenten zusammen einen den Aminstickstoff einschließenden Alkylenrest mit 4 bis 8 C-Atomen bilden. Geeignet sind z.B. die Oxalkylierungsprodukte von Ethylamin, Propylamin, Stearylamin, Methyl-dodecylamin, Dibutylamin, Piperidin, Ethylendiamin oder Hexamethylendiamin.

Erfindungsgemäß gut geeignete Alkanolamine sind demnach zum Beispiel Monoalkanolamine, wie N-Decyl-ethanolamin, N-Methyl-N-stearyl-ethanolamin, N,N-Bis-n-dodecylethanolamin, N,N-Bis-cyclohexyl-propanol (2)-amin und N-(2-hydroxy-ethyl)-piperidin als Beispiel für den Alkylenoxidderivat eines cyclischen aliphatischen Amins.

Ebenso eignen sich Dialkanolamine wie N,N-Bis-(2-)hydroxypropyl-n-dodecylamin oder N,N-Bis-hydroxyethyl-n-octadecylamin.

Schließlich eignen sich solche Trialkanolamine, deren Alkylenreste hinreichend lang sind, um eine gewisse Löslichkeit in der organischen Phase der zu polymerisierenden Mischung bewirken wie z.B. Tri-(N-2-hydroxylbutyl)amin.

Es entstehen bei der Herstellung der erfindungsgemäßen Alkanolamine auch durch Substitution der Hydroxylalkylgruppen mit weiterem Alkylenoxid als Nebenprodukte Polyalkylenglykolderivate der eingangs erwähnten Amine mit zum Beispiel 2 bis 3 durch Etherbrücken verknüpften Alkylenglykolresten anstelle einer Hydroxylalkylgruppe. Diese Verbindungen sind auch für sich wirksam.

Weitere geeignete Amine sind e3) 2,4-Diamino-1,3,5-triazine, die in 6-Stellung einen Alkylrest mit 1 bis 20 C-Atomen, bei dem gegebenenfalls in $\alpha$-Stellung ein H-Atom durch einen 2,4-Diamino-1,3,5-triazin-6-yl-Rest ersetzt ist, einen Cycloalkylrest mit 5 bis 12 C-Atomen oder einen Arylrest mit 6 bis 12 C-Atomen enthalten.

Beispiele für erfindungsgemäß einzusetzende 2,4-Diamino-1,3,5-triazin-Derivate sind:
6-Methyl-2,4-diamino-1,3,5,-triazin (Acetoguanamin)
6-Ethyl-2,4-diamino-1,3,5,-triazin (Propioguanamin)
6-Propyl-2,4-diamino-1,3,5,-triazin (Butyroguanamin)
6-Isopropyl-2,4-diamino-1,3,5,-triazin (Isobutyroguanamin)
6-Nonyl-2,4-diamino-1,3,5,-triazin (Caprinoguanamin)
6-Heptadecyl-2,4-diamino-1,3,5,-triazin (Palmitinoguanamin)
6-Cyclopentyl-2,4-diamino-1,3,5,-triazin
6-Cyclohexyl-2,4-diamino-1,3,5,-triazin
6-Cyclohexylmethyl-2,4-diamino-1,3,5,-triazin
6-Methylcyclohexyl-2,4-diamino-1,3,5,-triazin
6-Phenyl-2,4-diamino-1,3,5,-triazin (Benzoguanamin)
6-(3-Pyridyl-)-2,4-diamino-1,3,5,-triazin
6-Benzyl-2,4-diamino-1,3,5,-triazin (Phenylacetoguanamin)
6-Toluyl-2,4-diamino-1,3,5,-triazin
6-Ethyl-2,4-diamino-1,3,5,-triazin.

Als Beispiel für ein 6-Alkyl-2,4-diamino-1,3,5-triazin, bei dem in α-Stellung ein H-Atom der Alkylgruppe durch einen 2,4-Diamino-1,3,5-triazin-6-yl-Rest ersetzt ist, sei Succinoguanamin genannt

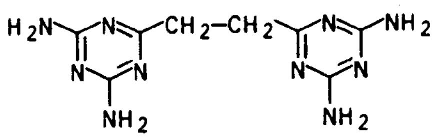

Es können auch Gemische von 2 oder mehreren der erfindungsgemäß einzusetzenden Diamino-triazin-Derivate verwendet werden.

Als weitere Zusatzstoffe können die expandierbaren Formmassen übliche Farbstoffe, Füllstoffe, Stabilisatoren, Synergisten, Keimbildner, Gleitmittel und dergleichen in üblichen wirksamen Mengen enthalten.

Die Herstellung der expandierbaren Styrolpolymerisate erfolgt in bekannter Weise durch Suspensionspolymerisation. Dazu wird Styrol, gegebenenfalls weitere Copolymere und die Zusatzstoffe in wäßriger Suspension, zweckmäßig unter Zusatz eines üblichen Suspendierhilfsmittels, polymerisiert. Das Treibmittel wird dabei bereits bei der Polymerisation mit vorgelegt oder im Laufe der Polymerisation zugefügt. Es kann aber auch erst nach beendeter Polymerisation dem Ansatz zugefügt werden. Die erhaltenen perlförmigen expandierbaren Polymerisate werden danach von der wäßrigen Phase abgetrennt, gewaschen und getrocknet.

Die expandierbaren Styrolpolymerisate weisen meist Perlformen auf. Die Form ist bedingt durch die Herstellung mittels Suspensionspolymerisation. Die Partikel liegen in annähernd kugelförmiger Gestalt vor. Die Perlen haben einen mittleren Durchmesser zwischen etwa 0,1 und 6 mm, vorzugsweise zwischen 0,2 und 4 mm, insbesondere zwischen 0,3 und 3 mm.

Die expandierbaren Formmassen können in bekannter Weise in üblichen Vorschäumern mit Heißluft oder Dampf zu perlförmigen Schaumstoffpartikeln aufgeschäumt werden. Die Schaumstoffperlen können in an sich bekannter Weise durch Erhitzen in nicht gasdicht schließenden Formen zu Formkörper verschweißt werden.

Die in den Beispielen genannten Teile sind Gewichtsteile.

Beispiele 1 bis 13

In einem druckfesten Rührkessel wurde eine Mischung aus 150 Teilen Wasser, 0,1 Teilen Natriumpyrophosphat, 100 Teilen Styrol, 0,45 Teilen Benzoylperoxid, 0,15 Teilen tert.-Butylperbenzoat, 7 Teilen Pentan sowie den in der Tabelle angegebenen Mengen an Flammschutzmittel, Aminen und Ammoniumsalzen auf 90°C erhitzt.

Nach 2 Stunden bei 90°C wurden 4 Teile einer 10 %igen wäßrigen Lösung von Polyvinylpyrrolidon zugegeben.

Dann wurde weitere 2 Stunden bei 90°C, anschließend 2 Stunden bei 110°C und schließlich 2 Stunden bei 120°C gerührt.

Die erhaltenen, expandierbaren Polystyrol-Teilchen werden durch Einwirkung von Wasserdampf geschäumt und nach eintägiger Lagerung durch weitere Behandlung mit Wasserdampf in einer geschlossenen Form zu Schaumstoffblöcken der Dichte 15 kg/m³ verschweißt.

Zur Beurteilung der Schaumstruktur wurde an aufgeschnittenen Schaumstoffproben die Homogenität der Zellstruktur und die Anzahl der zellen pro 1 mm bestimmt.

Die erhaltenen Ergebnisse sind in der Tabelle zusammengestellt.

Beispiele 1 bis 3 und 11 sind Vergleichsbeispiele.

Tabelle

| Beispiel | Hexabrom-cyclododecan (Gew.-%) | Ammoniumsulfat (AS) bzw. Ammoniumbicarbonat (AB) Gew.-% im Ansatz | Gew.-% im Polymerisat | Amin (Gew.%) | Zellzahl (Zellen/mm) | mittlere Zellzahl (Zellen/mm) | Zellstruktur | Wärmeleitzahl DIN 52 612 10°C (W/°km) |
|---|---|---|---|---|---|---|---|---|
| 1 | 0,7 | - | - | - | 2-20 | 18 | inhomogen | 0,0380 |
| 2 | 0,7 | AS 00,1 | 0,0002 | - | 6-25 | 12 | inhomogen | 0,0382 |
| 3 | 0,7 | - | - | A 0,01 | 2-10 | 7 | inhomogen | 0,0371 |
| 4 | 0,7 | AS 0,01 | 0,002 | A 0,01 | 8- 9 | 8,2 | homogen | 0,0365 |
| 5 | 0,7 | AS 0,005 | 0,0001 | A 0,01 | 7- 8 | 7,4 | homogen | 0,0367 |
| 6 | 0,7 | AS 0,001 | 0,00007 | A 0,01 | 7- 8 | 7,5 | homogen | 0,0365 |
| 7 | 0,7 | AS 0,0005 | 0,00005 | A 0,01 | 7- 8 | 7,4 | homogen | 0,0361 |
| 8 | 0,7 | AB 0,001 | 0,00007 | A 0,01 | 8-10 | 9 | homogen | 0,0367 |
| 9 | 0,7 | AB 0,0005 | 0,00005 | A 0,01 | 6- 8 | 7 | homogen | 0,0365 |
| 10 | 0,7 | AS 0,01 | 0,002 | B 0,01 | 8- 9 | 8,6 | homogen | 0,0364 |
| 11 | 0,7 | - | - | C 0,02 | 3-11 | 7,9 | inhomogen | 0,0380 |
| 12 | 0,7 | AS 0,005 | 0,00009 | C 0,02 | 7- 8 | 7,6 | homogen | 0,0369 |
| 13 | 0,7 | AB 0,001 | 0,00006 | C 0,02 | 8- 9 | 8,3 | homogen | 0,0368 |

A = N,N-Bis-(2-hydroxyethyl)-octadecylamin (Armostat 400 der Firma Akzo)

B = Di-n-hexylamin

C = 6-Nonyl-2,4-diamino-1,3,5-triazin

## Patentansprüche

1. Expandierbare Styropolymerisate, enthaltend
   a) ein Styrolpolymerisat
   b) 1 bis 10 Gew.-% eines $C_3$-$C_6$-Kohlenwasserstoffs als Treibmittel
   c) 0,4 bis 6 Gew.-% einer organischen Bromverbindung als Flammschutzmittel
   d) 0,00001 bis 0,1 Gew.-% eines Ammoniumsalzes
   e) 0,001 bis 0,1 Gew.-% eines organischen Amins, ausgewählt aus der Gruppe der
      e1) Amine der allgemeinen Formel $NR_1R_2R_3$, in der $R_1$ = Alkyl oder Cycloalkyl mit 4 bis 20 C-Atomen, bzw., wenn $R_2$ = $R_3$ = H, mit 6 bis 20 C-Atomen, $R_2$ und $R_3$ = H oder Alkyl oder Cycloalkyl mit 1 bis 15 C-Atomen bedeutet,
      e2) Oxalkylierungsprodukte des Ammoniaks oder eines primären oder sekundären Amins mit 1 bis 20 C-Atomen, und
      e3) 2,4-Diamino-1,3,5-triazine, die in 6-Stellung einen Alkylrest mit 1 bis 20 C-Atomen, bei dem gegebenenfalls in ω-Stellung ein H-Atom durch einen 2,4-Diamino-1,3,5-triazin-6-yl-Rest ersetzt ist, einen Cycloalkylrest mit 5 bis 12 C-Atomen oder einen Arylrest mit 6 bis 12 C-Atomen enthalten
   und gegebenenfalls
      f) übliche Zusatzstoffe in wirksamen Mengen,
   wobei die Prozentangaben sich jeweils auf das Styrolpolymerisat beziehen.

## Claims

1. Expandable styrene polymers comprising
   a) a styrene polymer,
   b) from 1 to 10% by weight of a $C_3$-$C_6$-hydrocarbon as blowing agent,
   c) from 0.4 to 6% by weight of an organic bromine compound as a flameproofing agent,
   d) from 0.00001 to 0.1% by weight of an ammonium salt,
   e) from 0.001 to 0.1% by weight of an organic amine, selected from the group consisting of
      e1) amines of the general formula $NR_1R_2R_3$, where $R_1$ it alkyl or cycloalkyl of 4 to 20 carbon atoms or, when $R_2$ and $R_3$ are each H, of 6 to 20 carbon atoms, and $R_2$ and $R_3$ are each H or alkyl or cycloalkyl of 1 to 15 carbon atoms,
      e2) oxalkylation products of ammonia or of a primary or secondary amine of 1 to 20 carbon atoms and
      e3) 2,4-diamino-1,3,5-triazines which contain, in the 6-position, alkyl of 1 to 20 carbon atoms in which an H atom in the ω-position may be replaced by 2,4-diamino-1,3,5-triazin-6-yl, or contain cycloalkyl of 5 to 12 carbon atoms or aryl of 6 to 12 carbon atoms,
   and, if required,
   f) conventional additives in effective amounts, the percentages in each case being based on the styrene polymer.

## Revendications

1. Polymères de styrène expansibles, contenant
   a) un polymère du styrène
   b) 1 à 10 % en poids d'un hydrocarbure en $C_3$-$C_6$ en tant qu'agent gonflant
   c) 0,4 à 6 % en poids d'un composé organique bromé en tant qu'agent ignifugeant
   d) 0,00001 à 0,1 % en poids d'un sel d'ammonium
   e) 0,001 à 0,1 % en poids d'une amine organique choisie dans le groupe formé par
      e1) les amines de formule générale $NR_1R_2R_3$ dans laquelle $R_1$ = alkyle ou cycloalkyle en C4-C20, ou bien, en C6-C20, lorsque $R_2$=$R_3$=H, en C1-C15, lorsque $R_2$ et $R_3$ = H ou alkyle ou cycloalkyle,
      e2) les produits d'oxyalkylation de l'ammoniac ou d'une amine primaire ou secondaire en C1-C20, et
      e3) les 2,4-diamino-1,3,5-triazines contenant en position 6 un groupe alkyle en C1-C20 dans lequel, le cas échéant, un atome d'hydrogène en position oméga est remplacé par un groupe 2,4-diamino-1,3,5-triazine-6-yle, un groupe cycloalkyle en C5-C12 ou un groupe aryle en C6-C12, et le cas échéant

f) des additifs usuels en proportions efficaces, les pourcentages indiqués se rapportant dans tous les cas au polymère de styrène.